# EUROPEAN PATENT APPLICATION

(11) **EP 4 494 853 A1**
(43) Date of publication of application: **22.01.2025**
(21) Application number: 24188023.6
(22) Date of filing: 11.07.2024
(51) Int. Cl.: B29C 65/74, B29C 65/00, B29D 30/42, B65H 21/00

(54) **DEVICE AND METHOD FOR SPLICING THE ENDS OF ELASTOMERIC COMPOUND STRIPS**

(30) Priority: 16.07.2023 SK 500602023
(71) Applicant: Konstrukta - TireTech, s. r. o., 911 01 Trencin (SK)
(72) Inventor: Pazej, Pavol, Trencín (SK); Dolinský, Alfréd, Dubnica nad Váhom (SK)
(74) Representative: Cechvalova, Dagmar

(57) **Abstract**

A device for splicing the ends of elastomeric compound strips, preferably with an anti-adhesive treatment, comprising a rotatable element (2), a profiled splicing element (3) coupled to the rotatable element (2), a pressure mechanism (5), a supporting frame (1), a support element (6) and a rotatable element (2):
- is movable by means of a pressure mechanism (5) relative to the supporting frame (1) and the support element (6) and is subjected to a force in a direction perpendicular to the surface of the end (88a,88c) of the strip of the anti-adhesion compound (8a) and the surface of the end (88b) of the strip of the anti-adhesion elastomeric compound (8b) at the place (C) of the splice,
- has an axis (R) of rotation perpendicular to the vector (v) of movement of the elastomeric compound strips (8a, 8b) with the anti-adhesion treatment while having a rotary movement formed by the mechanism (4) for forming the rotary movement.

## Description

### Field of the invention

The invention relates to a method for splicing the ends of elastomeric compounds strips with an anti-adhesive treatment, and to a device for carrying out this method.

### State of the art

Currently used methods of splicing the ends of elastomeric compounds strips use different splicing principles. Some technical solutions are based on the formation of a mechanical splice by perforating the materials to be spliced. However, under mechanical tension, there is a concentration of tension at these points, which increases the risk of breakage of the spliced materials.

Other technical solutions use pressure splicing locally at a single point, or by a moving tool that creates a splice with dimensions larger than the dimensions of the contact area of the tool itself and the material to be spliced. Examples of such technical solutions are given in EP 0325295 B1 and SU1016201 A1.

The technical solution according to EP 0325295 B1 describes the splicing of elastomeric materials in the form of a strip with a transverse movement of the splicing device. This method is not suitable for splicing the elastomeric compounds with anti-adhesive treatment, where it is not possible to ensure sufficient adhesion precisely because of the anti-adhesive treatment of both strips to be spliced at the point of the splice. The cause is the direction of movement of the splicing element perpendicular to the movement of the elastomeric materials in the form of a strip, where the layers with the anti-adhesion treatment come into contact.

SU1016201 A1 includes a support element with a curved surface, rotatable in the vertical plane with a center of rotation via the support element. To increase the efficiency of the splicing process, the pressure element is provided with an actuator which is hingedly connected to the pressure element at one end thereof and the pivot point is hingedly coupled at the other end thereof. This method, like EP 0325295 B 1, is not suitable for splicing the elastomeric compounds with an anti-adhesive treatment due to the movement of the splicing element perpendicular to the movement of the elastomeric materials in the form of a strip, which causes contact between the layers with the anti-adhesive treatment, which prevents the formation of a splice.

The mentioned technical solutions require a discontinuous movement of the spliced strips and it is not possible to use them when splicing the elastomeric compounds with anti-adhesive treatment, where it is not possible to ensure sufficient adhesion precisely because of the anti-adhesive treatment of both spliced strips at the point of splice.

Document EP19839345A describes the continuous splicing of two or more rubber strips (elastomeric strips) to form a compound strip of rubber compound (elastomeric compound), using two oppositely positioned rollers for this purpose, the upper roller having gears disposed on it, which gears may be U-shaped, V-shaped, or other shapes. By setting a fixed gap between the toothed wheels of the upper roller and the smooth cylindrical surface of the lower roller, or the toothed surface of the upper roller and the complementary surface of the lower roller, the upper rubber strip is pushed into the lower rubber strip while creating local deformations of both strips in the shape of U, V or other, which are intended to ensure the splicing of both strips without cutting any of the rubber strips (elastomeric strips).

The above technical solution is suitable for continuous splicing of long rubber strips (elastomeric strips without anti-adhesive treatment), but when splicing the ends of rubber strips (elastomeric strips) with anti-adhesive treatment it has several disadvantages, the main disadvantages include the uneven arrangement of local splices (deformations) created by pushing the upper rubber strip into the lower rubber strip by means of toothing, while the density of local splices is determined by the rotation of the toothing, which creates the risk of breaking off the ends of the rubber strips due to the insufficient density of local splices, which determines the strength of the splice, while it is also necessary to take into account the effect of the anti-adhesion treatment of the rubber strips.

The object of the present invention is to provide a device for splicing the ends of strips of elastomeric compounds with an anti-adhesive treatment, which eliminates the disadvantages of the prior art, in particular, it allows the ends of strips of elastomeric compounds to be spliced regardless of the anti-adhesive treatment and does not require discontinuous movement of the spliced strips of elastomeric compounds with an anti-adhesive treatment in order to form a splice.

### Summary of the invention

The present invention solves the mentioned disadvantages by using a movable rotating element connected to the profile splicing element, whereby when the splice of the strips of elastomeric compounds with anti-adhesive treatment is formed by the profile splicing element, perforation of the strips of elastomeric compounds with anti-adhesive treatment does not occur.

A device for splicing the ends of elastomeric compound strips with an anti-adhesion treatment includes a support frame, a support element, a pressure mechanism, a spring member, a rotatable element arranged movably relative to the support frame and the support element by the pressure mechanism, a profiled splicing element connected to the rotatable element. The rotatable element is arranged, by means of a pressure mechanism, to exert a force in a direction perpendicular to the surface of the spliced strips of the elastomeric compounds with the anti-adhesive treatment at the splice point of the strips of elastomeric compounds with the anti-adhesive treatment.

The rotatable element is advantageously arranged, by means of a pressure mechanism, to exert a force against the support element.

The rotation element is arranged to have an axis of rotation perpendicular to the movement vector of the strips of the elastomeric compound with the anti-adhesive treatment.

The rotary movement of the rotary element is formed by a mechanism to form a rotary movement.

Preferably, the support element is in the form of a support roller and the mechanism for generating the rotary movement transmits the torque from the rotary movement of the support roller. Preferably, the profiled splicing element is formed by divided profiled splicing segments. Preferably, the device for splicing the strips of elastomeric compounds with an anti-adhesion treatment also comprises a dividing blade that is connected to the rotatable element.

### Brief drawing description

The invention will be described in more detail with reference to an example of a device for splicing the ends of elastomeric compounds strips with an anti-adhesive treatment according to the invention, shown in the accompanying figures, in which each of the figures is represented:

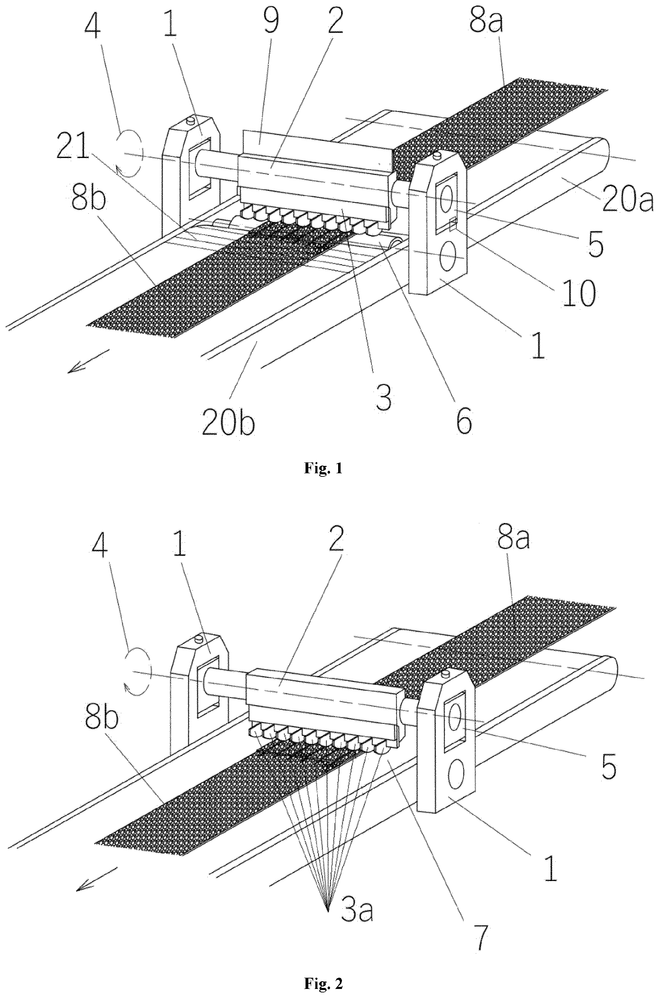

Fig. 1 - a view of a device according to the invention comprising a profiled splicing element,
Fig. 2 - a view of a device according to the invention comprising profiled splicing segments,

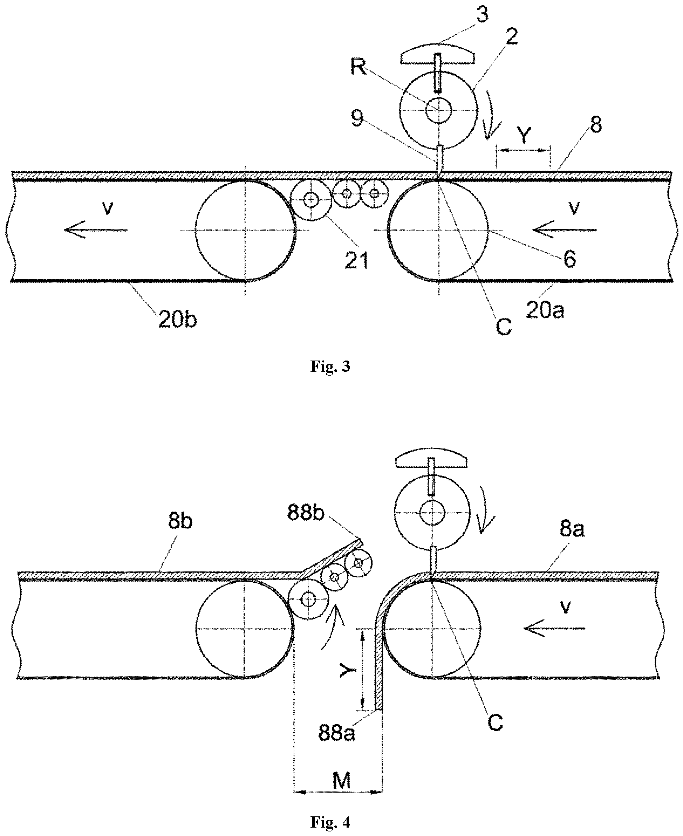

Fig. 3 - a view of a device according to the invention when a section Y of the moving continuous strip is in front of location C,
Fig. 4 - a view of the device according to the invention when the swinging conveyor is lifted,

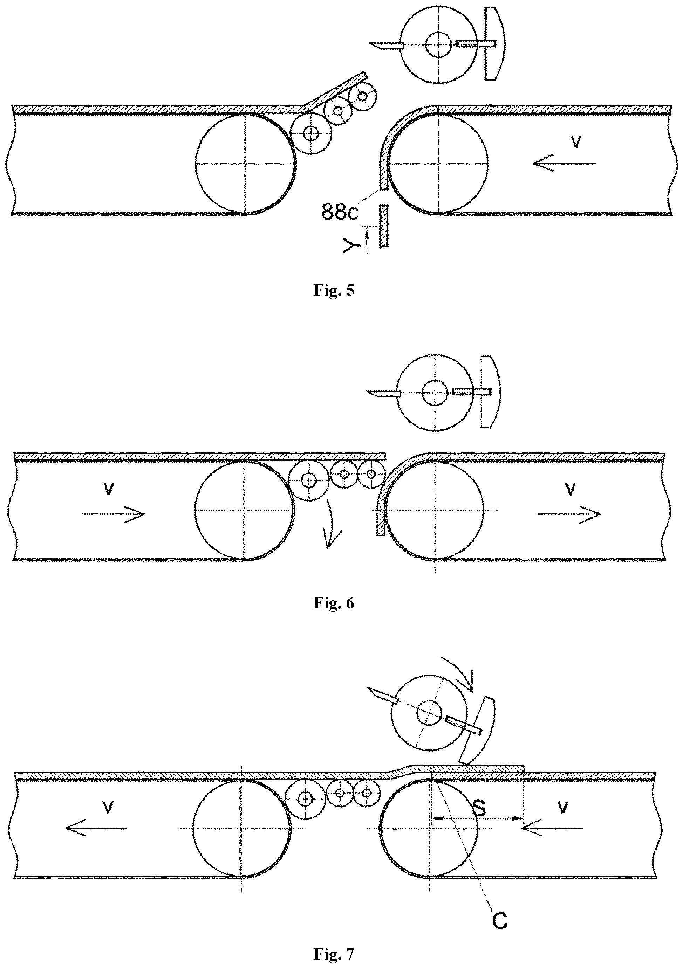

Fig. 5 - a view of the device according to the invention, after cutting off a part Y of the strip,
Fig. 6 - a view of the device according to the invention, reverse movement of conveyors,
Fig. 7 - a view of the device according to the invention, formation of the splice S of the strips ends

### Detailed description of the invention

A device for splicing the ends of elastomeric compound strips with an anti-adhesive treatment includes conveyors 20a and 20b, a non-displayed means 22 for detecting defective particles X, a swinging conveyor 21, a rotatable element 2, a profiled splicing element 3 connected to the rotatable element 2, the profiled splicing element 3 preferably comprises divided profiled splicing segments 3a, a dividing blade 9 connected to the rotatable element 2 and having a common axis R of rotation, a pressure mechanism 5, a spring member 10, a support frame 1, a support element 6, a continuous strip 8 of an elastomeric compound with an anti-adhesion treatment.

The non-displayed defect particle X detection means 22 identifies a location containing a defect particle X in a continuous strip 8 of the anti-adhesive elastomeric compound moving on the conveyors 20a and 20b. At the moment when the section Y of the moving continuous strip 8 of the elastomeric compound with the anti-adhesive treatment containing the defective particle X is located in front of the location C, in the direction of the vector in the movement of the continuous strip 8 of the elastomeric compound with the anti-adhesive treatment, rotation of the rotatable element 2 to which the dividing blade 9 is connected occurs, thereby cutting the continuous strip 8 of the anti-adhesive elastomeric compound and forming a strip 8a of the anti-adhesive elastomeric compound and its newly formed strip end 88a, and a strip 8b of the anti-adhesive elastomeric compound and its newly formed strip end 88b.

Location C is the point of contact between the dividing blade and the moving strip 8 of the elastomeric compound with the anti-adhesive treatment.

The position of the rotatable element 2 relative to the supporting frame 1 before its rotation is adjusted by the pressure mechanism 5, depending on the thickness of the strip 8 of the elastomeric compound with the anti-adhesion treatment.

The axis of rotation R of the rotatable element is perpendicular to the vector v of the movement of the strip 8 of the elastomeric compound with the anti-adhesion treatment.

The rotary motion of the rotatable element 2 is formed by the mechanism 4 to form the rotary movement by transferring the torque from the rotary movement of the support element 6. The support element 6 is preferably a roll.

The support element 6 is arranged at the location C.

The end 88b of the strip 8b of the elastomeric compound with the anti-adhesion treatment is lifted by the swinging conveyor 21, whereby the swinging movement of the conveyor 21 occurs at the same time to create a gap M between the conveyors 20a and 20b.

The conveyor 20a moves the end 88a of the strip 8a of the elastomeric compound with the anti-adhesion treatment into the gap M, wherein rotation of the rotatable element 2 occurs when the portion Y of the strip 8a of the elastomeric compound with the anti-adhesion treatment containing the defective particle X is located behind the location C in the direction of movement of the strip 8a of the elastomeric compound with the anti-adhesion treatment, is the dividing blade 9 is connected to the rotatable element 2, thereby the cutting off the portion Y of the strip 8a of the elastomeric compound with the anti-adhesion containing the defective particle X is carried out. The cut portion Y of the strip falls into the gap M. By the cutting off the portion Y of the strip 8a of the elastomeric compound with the anti-adhesion treatment, a newly formed end 88c of strip 8a of the elastomeric compound with the anti-adhesion treatment is formed.

The swinging conveyor 21 changes the position of the end 88b of the strip 8b of the elastomeric compound with the anti-adhesion treatment so that the surface of the end 88b of the strip 8b of the elastomeric compound with the anti-adhesion treatment is aligned with the surface of the strip 8a of the elastomeric compound with the anti-adhesion treatment lying on the conveyor 20a.

Consequently, by reversing movement of the conveyors 20a and 20b (by the movement in the direction opposite to the vector in the movement of the original continuous strip 8 of the elastomeric compound with the anti-adhesion treatment), the end 88c of the strip 8a of the elastomeric compound with the anti-adhesion treatment being located in the gap M is pulled out onto the conveyor 20a, and at the same time the end 88b of the strip 8b of elastomeric compound with the anti-adhesion treatment is moved from the conveyor 20b onto the conveyor 20a, thereby causes the overlapping of ends 88b and 88c of the strips 8a and 8b of the elastomeric compound with the anti-adhesion treatment.

When the end 88c of the strip 8a of the elastomeric compound with the anti-adhesion treatment located in the gap M is pulled onto the conveyor 20a, the direction of movement of the conveyors 20a and 20b is changed again.

The movement of the conveyors 20a and 20b is in the direction of the vector v. The conveyors 20a and 20b move, among other things, the overlapped ends 88b and 88c of the strips 8a and 8b of the elastomeric compound with the anti-adhesion treatment, wherein when the overlapped ends 88b and 88c of the strips 8a and 8b of the elastomeric compound with the anti-adhesion treatment are located at location C, the rotation of the rotatable element 2 to which the profiled splicing element 3 is spliced causes the divided profiled splicing segments 3a, which are fixed on the splicing element 3, to be applied with a force that is perpendicular to the surface of the ends 88b and 88c of the strips 8a and 8b of the elastomeric compound with the anti-adhesion treatment, thereby forming a splice S of the ends 88b and 88c of the strips 8a and 8b of the elastomeric compound with the anti-adhesion treatment.

Together with the pressure mechanism 5, by which the position of the rotatable element 2 relative to the supporting frame 1 is adjusted, a spring member 10 with an adjustable resistance value is advantageously arranged, which makes it possible to prevent the strips 8a and 8b of the elastomeric compound with the anti-adhesive treatment from being cut when the joint S is formed.

Another example of an embodiment of the invention may be a device for splicing the ends of strips of the elastomeric compounds with the anti-adhesive treatment, comprising the conveyors 20a and 20b, a swinging conveyor 21, a rotatable element 2, a profiled splicing element 3 coupled to the rotatable element 2, a pressure mechanism 5, a supporting frame 1, a support element 6, a spring member 10.

On the conveyors 20a and 20b, there are strips 8a and 8b of the elastomeric compound with the anti-adhesion treatment and the ends 88a and 88b of the strips formed by the non-displayed separating device located on the conveyor 20a.

During the transfer from the conveyor 20a to the conveyor 20b, the end 88b of the strip 8b of the elastomeric compound with the anti-adhesion treatment is lifted by the swinging movement of the conveyor 21, whereby the swinging movement of the conveyor 21 simultaneously creates a gap M between the conveyors 20a and 20b.

The conveyor 20a moves the end 88a of the strip 8a of the elastomeric compound with the anti-adhesion treatment into the gap M.

The swinging conveyor 21 changes the position of the end 88b of the strip 8b of the elastomeric compound with the anti-adhesion treatment so that the surface of the end 88b of the strip 8b of the elastomeric compound with the anti-adhesion treatment is aligned with the surface of the strip 8a of the elastomeric compound with the anti-adhesion treatment lying on the conveyor 20a.

Consequently, by reversing movement of the conveyors 20a and 20b (by the movement in the direction opposite to the vector in the movement of the original continuous strip 8 of the elastomeric compound with the anti-adhesion treatment), the end 88a of the strip 8a of the elastomeric compound with the anti-adhesion treatment being located in the gap M is pulled out onto the conveyor 20a, and at the same time the end 88b of the strip 8b of elastomeric compound with the anti-adhesion treatment is moved from the conveyor 20b onto the conveyor 20a, thereby causes the overlapping of ends 88a and 88b of the strips 8a and 8b of the elastomeric compound with the anti-adhesion treatment.

When the end 88a of the strip 8a of the elastomeric compound with the anti-adhesion treatment located in the gap M is pulled onto the conveyor 20a, the direction of movement of the conveyors 20a and 20b is changed again.

The movement of the conveyors 20a and 20b is in the direction of the vector v. The conveyors 20a and 20b move, among other things, the overlapped ends 88a and 88b of the strips 8a and 8b of the elastomeric compound with the anti-adhesion treatment, wherein when the overlapped ends 88a and 88b of the strips 8a and 8b of the elastomeric compound with the anti-adhesion treatment are located at location C, the rotation of the rotatable element 2 to which the profiled splicing element 3 is spliced causes the profiled splicing element 3, to be applied with a force that is perpendicular to the surface of the ends 88a and 88b of the strips 8a and 8b of the elastomeric compound with the anti-adhesion treatment, thereby forming a splice S of the ends 88a and 88b of the strips 8a and 8b of the elastomeric compound with the anti-adhesion treatment.

The position of the rotatable element 2 relative to the supporting frame 1 before its rotation is adjusted by the pressure mechanism 5, depending on the thickness of the strips 8a and 8b of the elastomeric compound with the anti-adhesion treatment.

A spring member 10 having an adjustable splicing force value which ensures that when the profiled splicing element 3 is applied with a force that is perpendicular to the surface of the ends 88a and 88b of the strips 8a and 8b of the elastomeric compound with the anti-adhesion treatment and the splice S of the ends 88a and 88b of the strips 8a and 8b of the elastomeric compound with the anti-adhesion treatment is formed, the perforation of the strips 8a and 8b of the elastomeric compound with the anti-adhesion treatment does not occur.

The axis of rotation R of the rotatable element is perpendicular to the vector v of the movement of the strip 8a and 8b of the elastomeric compound with the anti-adhesion treatment.

The rotary movement of the rotatable element 2 is formed by using the mechanism 4 to forming the rotary movement by transferring a torque from an external torque source.

Location C is the point of contact of the profiled splicing element 3 with the moving ends 88a and 88b of the strips 8a and 8b of the elastomeric compound with the anti-adhesion treatment.

The support element 6 is arranged at the location C.

The support element 6 is preferably a cylinder.

As another example of an embodiment of the invention, there may be provided a device for splicing the ends of elastomeric compound strips with an anti-adhesion treatment, comprising a conveyor 20c, a conveyor belt 7 preferably arranged together with a non-displayed reinforcing element 13, a rotatable element 2, a profiled splicing element 3 coupled to the rotatable element 2, the profiled splicing element 3 preferably being formed by divided profiled splicing segments 3a of a pressure mechanism 5, a supporting frame 1, a support element 6.

The conveyor 20c includes a strip 8a of the elastomeric compound with the anti-adhesion treatment and the end 88a of the strip, which is the remainder of the material found in the undisplayed supply pallet A, and a strip 8b of the elastomeric compound with the anti-adhesion treatment and the end 88b of the strip, which is new material from the undisplayed supply pallet B and is placed by an undescribed handling means on the end 88a of the strip of the elastomeric compound with the anti-adhesion treatment, thereby the overlapping the ends 88a and 88b of the strips 8a and 8b of the elastomeric compound with the anti-adhesion treatment.

The movement of the conveyor 20c is in the direction of the vector v. The conveyor 20c moves, among other things, the overlapped ends 88a and 88b of the strips 8a and 8b of the elastomeric compound with the anti-adhesion treatment, wherein when the overlapped ends 88a and 88b of the strips 8a and 8b of the elastomeric compound with the anti-adhesion treatment are located at location C, the rotation of the rotatable element 2 to which the profiled splicing element 3 is spliced causes the divided profiled splicing segments 3a, which are fixed on the splicing element 3, to be applied with a force that is perpendicular to the surface of the ends 88a and 88b of the strips 8a and 8b of the elastomeric compound with the anti-adhesion treatment, thereby forming a splice S of the ends 88a and 88b of the strips 8a and 8b of the elastomeric compound with the anti-adhesion treatment.

The position of the rotatable element 2 relative to the supporting frame 1 before its rotation is adjusted by the pressure mechanism 5, depending on the thickness of the strips 8a and 8b of the elastomeric compound with the anti-adhesion treatment.

The axis of rotation R of the rotatable element is perpendicular to the vector v of the movement of the strip 8a and 8b of the elastomeric compound with the anti-adhesion treatment.

The rotary movement of the rotatable element 2 is formed by using the mechanism 4 to forming the rotary movement by transferring a torque from an external torque source.

Location C is the point of contact of the profiled splicing element 3 with the moving ends 88a and 88b of the strips 8a and 8b of the elastomeric compound with the anti-adhesion treatment.

The support element 6 is arranged at the location C.

The support element 6 preferably is a conveyor belt 7 preferably arranged together with the not displayed reinforcing element 13.

The above description is included to illustrate the operation of advantageous embodiments of the invention and not to limit the scope of the invention. Based on the above explanation, it will be apparent to the expert skilled in the art the many variations that fall within the scope of the present invention, all the details can be further replaced by other technically equivalent elements.

Wherever technical features are mentioned in any claim and followed by relation marks, such relation marks have been included only for the purpose of increasing the clarity of the claims and therefore such relation marks have no limiting effect on the interpretation of each feature identified by such reference marks.

### List of reference numerals:

- 1: a supporting frame
- 2: a rotatable element
- 3: a profiled splicing element
- 3a: divided profiled splicing segments
- 4: a mechanism for forming rotary movement
- 5: a pressure mechanism
- 6: a support element
- 6a: a support roller
- 6b: a belt (support)
- 7: a conveyor belt
- 8: continual strip (of elastomeric compound)
- 8a: a strip
- 8b: a strip
- 9: a dividing blade
- 10: a spring member
- 13: a reinforcing element
- 20a: a conveyor
- 20b: a conveyor
- 21: a swinging conveyor
- 22: a means (for detection)
- 88a: end of the strip
- 88b: end of the strip
- 88c: end of the strip
- C: location, place (splice / contact of the dividing blade with the moving belt)
- M: gap
- R: axis of rotation
- S: splice (of the strips ends)
- v: vector (of the movement of the continuous strip)
- X: defective particle
- Y: section (of the moving continuous strip)

## Claims

1. Device for splicing the ends of elastomeric compound strips preferably with an anti-adhesive treatment, comprising a rotatable element (2), a profiled splicing element (3) coupled to the rotatable element (2), a pressure mechanism (5), a supporting frame (1) a support element (6) **characterized in that** the rotatable element (2):
- is movable by means of a pressure mechanism (5) relative to the supporting frame (1) and the support element (6) and is subjected to a force in a direction perpendicular to the surface of the end (88a, 88c) of the strip of the anti-adhesion compound (8a) and the surface of the end (88b) of the strip of the anti-adhesion elastomeric compound (8b) at the place (C) of the splice,
- has an axis (R) of rotation perpendicular to the vector (v) of movement of the elastomeric compound strips (8a, 8b) with an anti-adhesion treatment while having a rotary movement formed by means of a mechanism (4) for forming the rotary movement.

2. Device for splicing ends of elastomeric compound strips preferably with an anti-adhesive treatment according to claim 1, **characterized in that** it comprises a dividing blade (9) for forming the spliced ends of elastomeric compound strips with an anti-adhesive treatment.

3. Device for splicing the ends of elastomeric compound strips preferably with an anti-adhesive treatment according to any one of the preceding claims, **characterized in that** the dividing blade (9) is coupled to a rotatable element (2) having a common axis (R) of rotation.

4. Device for splicing the ends of elastomeric compound strips preferably with an anti-adhesive treatment according to any one of the preceding claims, **characterized in that** the pressure mechanism (5) comprises a spring member (10).

5. Device for splicing the ends of elastomeric compound strips preferably with an anti-adhesive treatment according to any one of the preceding claims, **characterized in that** the spring member (10) has an adjustable value of the splicing force.

6. Device for splicing the ends of elastomeric compound strips preferably with an anti-adhesive treatment according to any one of the preceding claims, **characterized in that** the support element (6) is in the form of a belt (6b) preferably arranged with the reinforcing element.

7. Device for splicing elastomeric compound supply strips, preferably with an anti-adhesion treatment according to any one of the preceding claims, **characterized in that** the support element (6) is in the form of a support roller (6a).

8. Device for splicing elastomeric compound supply strips, preferably with an anti-adhesion treatment according to any one of the preceding claims, **characterized in that** the mechanism (4) for forming the rotary movement transmits a torque from an external source of movement.

9. Device for splicing elastomeric compound supply strips, preferably with anti-adhesion treatment according to any one of the preceding claims, **characterized in that** the mechanism (4) for forming the rotary movement transmits a torque from the rotary movement of the support element (6).

10. Device for splicing elastomeric compound supply strips, preferably with an anti-adhesion treatment according to any one of the preceding claims, **characterized in that** the profiled splicing element (3) is formed by divided profiled splicing segments (3a).

11. Device for splicing elastomeric compound supply strips preferably with an anti-adhesion treatment according to any one of the preceding claims, **characterized in that** the splicing element (3) has an adjustable distance from the support element (6).

12. Method for splicing the ends of elastomeric compound strips preferably with an anti-adhesive treatment, comprising providing a rotatable element (2), a profiled splicing element (3) coupled to the rotatable element (2), a pressure mechanism (5), a supporting frame (1) of the support element (6), **characterized in that** the rotatable element (2):
- is movable by means of a pressure mechanism (5) relative to the supporting frame (1) and the support element (6) and is subjected to a force in a direction perpendicular to the surface of the end (88a, 88c) of the strip of the anti-adhesion compound (8a) and the surface of the end (88b) of the strip of the anti-adhesion elastomeric compound (8b) at the place (C) of the splice,
- has an axis (R) of rotation perpendicular to the vector (v) of movement of the elastomeric compound strips (8a, 8b) with the anti-adhesion treatment while having a rotary movement formed by the mechanism (4) for forming the rotary movement.
